# EUROPÄISCHE PATENTSCHRIFT

(11) **EP 3 064 857 B1**
(45) Veröffentlichungstag und Bekanntmachung des Hinweises auf die Patenterteilung: **13.06.2018**
(21) Anmeldenummer: 16158142.6
(22) Anmeldetag: 01.03.2016
(51) Int. Cl.: F24H 4/04, F16B 5/00, F16B 5/10, F24H 9/02, F24H 1/18

(54) **GERÄTEHAUBE**
DEVICE HOOD
CAPOT D'APPAREIL

(30) Priorität: 03.03.2015 DE 102015203780
(43) Veröffentlichungstag der Anmeldung: 07.09.2016
(73) Patentinhaber: Glen Dimplex Deutschland GmbH, 95326 Kulmbach (DE)
(72) Erfinder: BRÜCKNER, Stefan, 96524 Neuhaus-Schierschnitz (DE)
(74) Vertreter: FDST Patentanwälte

(56) Entgegenhaltungen:
- DE-U1- 9 315 116
- DE-U1-202006 004 298
- GB-A- 2 348 924
- US-A1- 2013 043 252

## Beschreibung

Die Erfindung betrifft eine Gerätehaube, welche sich in einer axialen Richtung erstreckt und ein erstes und ein zweites Haubenteil umfasst, wobei die Haubenteile in montiertem Zustand an Trennkanten aneinander anliegen und in einer Verbindungsrichtung senkrecht zur axialen Richtung auseinanderziehbar sind, wobei zur Fixierung der Haubenteile aneinander in montiertem Zustand eine lösbare Verriegelung mit zumindest einem drehbaren Verriegelungselement angeordnet ist.

In der US 2013/0043252 A1 ist beispielsweise eine zylinderförmige und zweiteilige Gerätehaube für einen Wasserheizer beschrieben.

Eine solche Gerätehaube findet üblicherweise Verwendung als Abdeckung und/oder zum Schutz von Komponenten oder Bauteilen eines Gerätes. Die Gerätehaube ist dabei häufig ein Teil eines Gehäuses oder einer Einhausung des Gerätes. Beispielsweise weist eine Wärmepumpe einen Grundkörper mit einem Wassertank auf sowie zusätzliche Komponenten, wie beispielsweise einen Lüfter, einen Verdampfer oder eine Elektronik, welche auf dem Grundkörper montiert sind. Zur Einhausung der Komponenten sind diese dann mit einer Gerätehaube überdeckt. Dabei weist die Gerätehaube zuweilen auch Anzeige- und/oder Bedienelemente oder Ausnehmungen für solche auf, mittels derer der Betrieb des Geräts von außen überwachbar und/oder einstellbar ist.

Die Gerätehaube ist insbesondere ein separates Bauteil, welches bei der Montage entsprechend aufgesetzt und anschließend beispielsweise am Grundkörper festgeschraubt wird. Besonders zur Wartung und/oder Reparatur der Komponenten ist die Gerätehaube sinnvollerweise abnehmbar und abschließend wieder aufsetzbar.

Häufig weist die Gerätehaube auch Anschlüsse für beispielsweise Luft oder Wasser auf und die Anschlüsse sind mit entsprechenden Rohren verbunden, welche insbesondere nicht Teil des Gerätes sind, sondern beispielsweise fester Bestandteil eines Hauses, in welchem das Gerät installiert ist. Besonders bei solchen fest installierten Anschlüssen ist es oftmals schwierig oder aufwendig, die Gerätehaube z.B. zwecks Wartung zu entfernen.

Aus der GB 2 348 924 A ist eine Vorrichtung zum Verbinden von zwei Teilen, insbesondere Raumteiler zu entnehmen, über die die Raumteiler wiederholbar miteinander verbunden werden können. Die Vorrichtung weist einen drehbaren Riegel auf, welcher stirnseitig in den einen Raumteiler eingesetzt wird. Am anderen Raumteiler ist ein Stift angeordnet, welcher bei einer Drehung des Riegels von diesem umgriffen wird.

Vor diesem Hintergrund liegt der Erfindung die Aufgabe zugrunde, eine verbesserte Gerätehaube anzugeben. Die Gerätehaube soll insbesondere möglichst einfach montierbar und demontierbar sein.

Die Aufgabe wird erfindungsgemäß gelöst durch eine Gerätehaube mit den Merkmalen gemäß Anspruch 1. Vorteilhafte Ausgestaltungen, Weiterbildungen und Varianten sind Gegenstand der Unteransprüche.

Die Gerätehaube ist insbesondere zur Verwendung bei einer Wärmepumpe ausgebildet. Dabei umfasst die Wärmepumpe einen Grundkörper, der insbesondere einen Wasserspeicher umfasst und/oder auf dem insbesondere eine Anzahl von Komponenten der Wärmepumpe, insbesondere ein Verdampfer und/oder ein Lüfter angeordnet und von der Gerätehaube verdeckt sind. Die Gerätehaube erstreckt sich in einer axialen Richtung und weist ein erstes und ein zweites Haubenteil auf. Diese Haubenteile liegen in montiertem Zustand an Trennkanten aneinander an und sind in einer Verbindungsrichtung senkrecht zur axialen Richtung auseinanderziehbar, wobei zur Fixierung der Haubenteile insbesondere aneinander in montiertem Zustand eine lösbare Verriegelung angeordnet ist. Diese weist zumindest ein drehbares Verriegelungselement auf, insbesondere einen

Verriegelungsbolzen. Das Verriegelungselement ist durch Drehung, vorzugsweise durch eine Vierteldrehung um eine Drehachse zwischen einer offenen und einer geschlossenen Stellung reversibel überführbar. Dabei sind die Haubenteile in der offenen Stellung auseinanderziehbar. Die geschlossene Stellung ist insbesondere eine fixierende Stellung, in welcher die beiden Haubenteile nicht auseinanderziehbar sind, sondern aneinander fixiert sind.

Die mit der Erfindung erzielten Vorteile bestehen insbesondere darin, dass die unter der Gerätehaube eingehausten Komponenten der Wärmepumpe, allgemein eines Gerätes, besonders einfach insbesondere zwecks Wartung zugänglich sind. Dazu braucht lediglich das Verriegelungselement durch Drehung in die offene Stellung gebracht zu werden, wodurch dann die Haubenteile auseinanderziehbar sind. Besonders vorteilhaft ist hierbei, dass lediglich eines der Haubenteile, nämlich das erste abgezogen zu werden braucht, während das andere, d.h. das zweite Haubenteil zunächst am Gerät verbleibt. Dadurch müssen Rohre und/oder Leitungen, welche möglicherweise über die Gerätehaube, insbesondere über das zweite Haubenteil in das Gerät hineingeführt sind nicht demontiert werden, wodurch sich eine Wartung des Gerätes deutlich vereinfacht. Dies ist besonders vorteilhaft im Zusammenhang mit einer Wärmepumpe, an welche Rohre oder Leitungen angeschlossen sind, welche fest mit der Umgebung verbunden sind, beispielsweise mit einem Gebäude.

Das Verriegelungselement ist beispielsweise aus Metall oder Kunststoff gefertigt. Vorzugsweise ist das Verriegelungselement einstückig ausgebildet, d.h. einteilig und aus lediglich einem Werkstoff gefertigt, beispielsweise als Spritzgussteil.

Die Haubenteile weisen jeweils eine vorzugsweise C-förmige Nut auf. Die jeweilige Nut ist über die jeweilige Trennkante zugänglich, wobei die Nuten eine gemeinsame insbesondere ringförmige Führungsnut bilden, zur Führung des Verriegelungselements beim Überführen zwischen dem offenen und dem geschlossenen Zustand. Mittels der C-förmigen Nut ist auf besonders einfache Weise eine Führung für ein drehbares Verriegelungselement realisiert. Dabei weist das Verriegelungselement eine Drehachse auf, um welche herum die jeweilige C-förmige Nut verläuft. Dabei folgt die C-förmige Nut einem kreisbogenförmigen Verlauf, welcher einen Mittelpunkt aufweist, der auf der Drehachse liegt. Die Drehachse durchläuft dann auch den Mittelpunkt der ringförmigen Führungsnut.

Die beiden Nuten sind dabei jeweils über zwei Nutöffnungen zugänglich, welche in der Trennkante des jeweiligen Haubenteils ausgebildet sind. In montiertem Zustand der Haubenteile liegen die Nutöffnungen des einen Haubenteils denen des anderen Haubenteils direkt gegenüber, sodass die Nuten sich aneinander anschließen und auf diese Weise die Führungsnut bilden. Die Nuten bilden insbesondere jeweils einen Halbring.

Weiterhin umfasst das Verriegelungselement einen insbesondere C-förmigen, d.h. kreisbogenförmigen Anlagesteg, der in der Führungsnut geführt ist und insbesondere in einer Umlaufrichtung um die Drehachse herum, vorzugsweise etwas mehr als zur Hälfte, verläuft. In eingesetztem Zustand des Verriegelungselementes greift der Anlagesteg dann in die Führungsnut ein und ist besonders sicher entlang der Führungsnut geführt.

Weiterhin ist die Führungsnut in einem der Haubenteile lediglich abschnittsweise ausgeführt. Dazu ist die Führungsnut insbesondere in vorzugsweise zwei Teilabschnitte unterbrochen. Die Führungsnut bildet zumindest einen Anschlag, vorzugsweise zwei Anschläge für den Anlagesteg aus. Durch diese nicht vollständig ausgeführte Führungsnut ist in vorteilhafter Weise ein Überdrehen des Verriegelungselements verhindert. Zudem sind durch die insbesondere zwei Anschläge die offene und die geschlossene Stellung des Verriegelungselements definiert, wodurch die Montage erheblich vereinfacht wird, da das Verriegelungselement lediglich bis an einen der Anschläge verdreht zu werden braucht, um die offene oder geschlossene Stellung einzustellen.

Zur Ausbildung der Anschläge ist die Führungsnut entsprechend teilringförmig ausgebildet, d.h. ringförmig mit einem massiv ausgeführten Abschnitt, welcher dann die Anschläge als zwei Enden des teilringförmigen Verlaufs bildet. Dadurch ist die Nut in dem einen der Haubenteile insbesondere in die zwei Teilabschnitte unterteilt. Von diesen bildet einer vorteilhaft eine Aufnahme für einen Führungszapfen beim Zusammenführen der beiden Haubenteile mit dem Verriegelungselement in offener Stellung, während der andere Teilabschnitt der teilweisen Aufnahme des Anlagestegs beim Überführen in die geschlossene Stellung dient. Entsprechend sind die Teilabschnitte in Umlaufrichtung unterschiedlich lang, wobei der Teilabschnitt für die Aufnahme des Anlagestegs beim Überführen in die geschlossene Stellung länger ist als der andere Teilabschnitt.

In einer bevorzugten Ausgestaltung ist das Verriegelungselement beim Auseinanderziehen unverlierbar an einem der Haubenteile gehalten, wodurch insbesondere die Demontage sowie auch eine Montage der beiden Haubenteile aneinander deutlich vereinfacht wird, da das Verriegelungselement nicht noch separat entnommen oder bereitgestellt werden muss.

In einer weiteren bevorzugten Ausgestaltung ist das Verriegelungselement in montiertem Zustand der Haubenteile zwischen den Trennkanten angeordnet, insbesondere von diesen umgriffen. Auf diese Weise ist zum Einen eine besonders platzsparende Anordnung realisiert. Zum Anderen ist bei einer solchen Ausgestaltung auch eine unverlierbare Halterung des Verriegelungselements auf besonders einfache Weise realisiert. Insbesondere wird zur unverlierbaren Halterung auf zusätzliche Elemente wie Befestigungsmittel oder Magnete verzichtet, d.h. das Verriegelungselement ist direkt und lediglich mittels des einen Haubenteils unverlierbar gehalten.

Das Verriegelungselement umfasst insbesondere einen zentralen Zapfen, auch als Bolzen bezeichnet, der sich in Richtung, d.h. entlang der Drehachse erstreckt und zylinderförmig ist. Am Zapfen ist insbesondere endseitig ein Kopf angebracht, insbesondere nach Art einer Scheibe. Von diesem Kopf ausgehend erstreckt sich dann der Anlagesteg parallel zur Drehachse beispielsweise über etwa ein Viertel der Länge des Bolzens sowie in Umlaufrichtung um den zentralen Bolzen herum. Auf diese Weise bildet der Anlagesteg eine C-förmige oder kreisbogenförmige Anformung am Verriegelungselement. Der Bolzen bildet dabei beispielsweise einen zentralen Stift, welcher vom Anlagesteg abschnittsweise und wallartig umringt ist.

In einer weiteren bevorzugten Ausgestaltung ist der Anlagesteg in offener Stellung in die Nut des einen Haubenteils eingefahren. Darunter wird insbesondere verstanden, dass der Anlagesteg überwiegend in der einen der Nuten einsitzt. Das Zusammensetzen der Haubenteile erfolgt dann vorteilhaft derart, dass in der offenen Stellung das andere Haubenteil in Verbindungsrichtung an das eine Haubenteil angesetzt wird und anschließend durch Drehung des Verriegelungselements der Anlagesteg aus der einen Nut heraus in die andere Nut hineingedreht wird, wodurch die Haubenteile miteinander verbunden werden.

In einer weiteren bevorzugten Ausgestaltung bildet der Anlagesteg zumindest einen Führungsfortsatz aus, der in offener Stellung in die Nut des zweiten Haubenteils hineinragt. Insbesondere ist der Führungsfortsatz durch den die Drehachse um etwas mehr als die Hälfte umlaufenden Anlagesteg ausgebildet und zwar durch jenen Endabschnitt, welcher über die halbe Strecke der Umfangsrichtung hinausragt. In Umlaufrichtung um die Drehachse herum betrachtet ist der Führungsfortsatz somit ein Endabschnitt des Anlagestegs. Der Führungszapfen dient auf vorteilhafte Weise zur Führung des zweiten Haubenteils beim Ansetzen an das erste Haubenteil, indem der Führungsfortsatz über die entsprechende Nutöffnung in die Nut des zweiten Haubenteils eingesetzt wird. Insbesondere umfasst der Anlagesteg zwei Führungszapfen, die an jeweils einem in Umlaufrichtung liegenden Ende des Anlagestegs angeordnet sind.

In einer weiteren bevorzugten Ausgestaltung fährt der Anlagesteg beim Überführen von der offenen in die geschlossene Stellung teilweise, insbesondere zur Hälfte von der Nut des einen Haubenteils in die Nut des anderen Haubenteils ein. Dadurch wird auf besonders einfache Weise eine Fixierung oder auch Arretierung der beiden Haubenteile aneinander realisiert. Insbesondere dringt dann der Führungszapfen beim Drehen weiter in die Nut des zweiten Haubenteils ein, sodass der Anlagesteg teilweise in das zweite Haubenteil eingefahren wird. Eine besonders sichere Fixierung ist dann beim Einfahren um etwa die Hälfte des Anlagestegs erzielt, der dann jeweils etwa zur Hälfte in den beiden Nuten der Haubenteile einsitzt. Dies wird insbesondere durch eine Vierteldrehung erzielt.

In einer weiteren bevorzugten Ausgestaltung greift in geschlossener Stellung der Anlagesteg zur Fixierung in beide Nuten gleichermaßen ein. Auf diese Weise ist eine besonders geeignete Fixierung erzielt, insbesondere da eine möglich Krafteinwirkung auf eines der Haubenteile jeweils gleichermaßen auf das Verriegelungselement wirkt.

Das Verriegelungselement ist vorzugsweise spiegelsymmetrisch ausgebildet, bezüglich einer Spiegelebene, welche parallel zur Drehachse verläuft. Die Spiegelebene teilt das Verriegelungselement somit in zwei zueinander spiegelsymmetrische Hälften.

In einer weiteren bevorzugten Ausgestaltung hintergreift der Anlagesteg in geschlossener Stellung zur Fixierung in beiden Haubenteilen eine insbesondere kreissektorförmige Haltekontur, welche durch die Führungsnut ausgebildet ist und insbesondere zwischen dem Anlagesteg und der Drehachse angeordnet ist. Die Haltekontur ist insbesondere ein Teil der Innenwand der Führungsnut. Durch diesen Hintergriff ist eine besonders sichere Fixierung gewährleistet, insbesondere gegen ein Auseinanderziehen der Haubenteile in Verbindungsrichtung. Die Haltekontur ist insbesondere eine Innenwand der Führungsnut und umläuft entsprechend die Drehachse. Damit bildet die Haltekontur insbesondere eine C-förmige Fläche aus.

In einer weiteren bevorzugten Ausgestaltung ist der Anlagesteg gespalten ausgeführt, zur Ausbildung mehrerer, insbesondere zweier Teilstege. Vorzugsweise ist der Anlagesteg derart gespalten, dass in geschlossener Stellung jeweils einer der Teilstege in jeweils einem der Haubenteile einsitzt. Durch die gespaltene Ausführung wird insbesondere eine Auslassung gebildet, die dann in geschlossener Stellung über die beiden Trennkanten führt, sodass das Verriegelungselement in diesem Bereich dünner ist und insbesondere mechanisch weniger stark belastet wird.

In einer weiteren bevorzugten Ausgestaltung umfasst das Verriegelungselement entlang der Drehachse einen Zapfen mit einer insbesondere endseitig angeordneten Anformung, auch als Haltekopf bezeichnet. Dieser ist vorzugsweise zylinderförmig ausgebildet, beispielsweise scheibenförmig oder als Vollkreis. Der Haltekopf ist insbesondere in Verbindungsrichtung in eine geeigneterweise halbzylinderförmige Aufnahmekammer in der Trennkante eines der Haubenteile eingesetzt und/oder einsetzbar. Der Haltekopf ermöglicht einen besonders sicheren Halt beim Einsetzen des Verriegelungselements in eines der Haubenteile. Dabei werden zunächst die Führungszapfen in die Nut des Haubenteils eingeführt und der Haltekopf in die Aufnahmekammer eingesetzt. Durch das Einsitzen in der Aufnahmekammer ist dann das Verriegelungselement sicher gehalten, obwohl dieses in der Nut zunächst lediglich mit den Führungszapfen einsitzt. Von dieser Einsetzstellung ausgehend wird dann der Anlagesteg im Wesentlichen, d.h. insbesondere bis auf die Führungszapfen, in die Nut des Haubenteils eingedreht, insbesondere durch eine Halbdrehung, sodass nun das andere Haubenteil ansetzbar ist. Der Haltekopf ist insbesondere entlang der Drehachse gemessen von dem Anlagesteg beabstandet, d.h. nicht auf gleicher Höhe mit diesem angeordnet, sondern versetzt hierzu.

In einer weiteren bevorzugten Ausgestaltung ist das Verriegelungselement in eingesetztem Zustand in Richtung der Drehachse insbesondere mittels der Anformung formschlüssig gehaltert. Dadurch ist auf vorteilhafte Weise ein Herausfallen und/oder Verrutschen des Verriegelungselements, insbesondere in Richtung der Drehachse, beim Ansetzen des zweiten Haubenteils verhindert.

In einer weiteren bevorzugten Ausgestaltung weisen beide Haubenteile jeweils in der Trennkante eine vorzugsweise halbzylinderförmige Aufnahmekammer auf und die Aufnahmekammern bilden in montiertem Zustand eine vorzugsweise zylinderförmige Aufnahme, in welcher das Verriegelungselement, insbesondere dessen Anformung formschlüssig gehalten ist und dadurch insbesondere lediglich um die Drehachse drehbar ist. Durch diese Einschränkung auf lediglich einen Freiheitsgrad der Bewegung für das Verriegelungselement wird die Handhabung bei der Montage deutlich vereinfacht.

In einer weiteren bevorzugten Ausgestaltung weist das Verriegelungselement eine offene und eine geschlossene Seite auf und einen Anlagesteg, der lediglich auf der geschlossenen Seite angeordnet ist. Mit anderen Worten: der Anlagesteg definiert und bildet die geschlossene Seite, die dann insbesondere dadurch geschlossen ist, dass der Anlagesteg von der Drehachse aus gesehen eine in radialer Richtung angeordnete Wandung bildet.

In einer weiteren bevorzugten Ausgestaltung ist das Verriegelungselement mit der offenen Seite in die Trennkante eines der Haubenteile einsetzbar. Dabei sind dann insbesondere die Führungsfortsätze in die entsprechende Nut einsetzbar.

In einer weiteren bevorzugten Ausgestaltung weist das Verriegelungselement insbesondere endseitig entlang der Drehachse einen Werkzeugeingriff auf. Dadurch ist auf vorteilhafte Weise eine Drehung mittels eines Werkzeugs möglich, z.B. mittels eines Schraubendrehers. Der Werkzeugeingriff ist insbesondere als Ausnehmung endseitig in den zentralen Zapfen eingebracht. Zudem weist der Werkzeugeingriff bezüglich der Gerätehaube vorzugsweise nach außen und ist somit besonders einfach zugänglich.

In einer weiteren bevorzugten Ausgestaltung sind die Haubenteile jeweils halbzylinderförmig ausgebildet und bilden insbesondere eine Fortsetzung des Grundkörpers in axialer Richtung. Eine solche runde Gerätehaube ist besonders flexibel in der Ausrichtung, d.h. insbesondere bei der Montage des Gerätes beispielsweise in einem Raum. Durch die halbzylinderförmige Ausbildung folgen die Trennkanten jeweils einem insbesondere U-förmigen Verlauf. Zudem schließt die Gerätehaube die halbzylinderförmige Ausbildung der Haubenteile insbesondere einen zylinderförmigen Innenraum ein, in welchem dann die Komponenten des Geräts untergebracht sind.

Vorteilhafterweise umfasst die Gerätehaube zwei Haubenteile, von denen eines eine Anzahl von vorzugsweise zwei Luftanschlüssen aufweist und das andere insbesondere frei von Luftanschlüssen ist. Hierbei ist ein Öffnen der Gerätehaube, z.B. zwecks Wartung besonders dadurch vereinfacht, dass lediglich das Haubenteil ohne Luftanschlüsse entfernt werden muss, um die darunter liegenden Komponenten freizulegen. Da die Luftanschlüsse oftmals mit entsprechend fixen Rohren verbunden sind, wäre eine Demontage der Gerätehaube insbesondere bei einer einteiligen Ausführung entsprechend aufwendig mit einer Demontage der Rohre verbunden. Durch die zweiteilige Ausführung, bei welcher eines der Teile, d.h. eines der Haubenteile frei von Anschlüssen, insbesondere Luftanschlüssen ist, entfällt ein solcher Aufwand. Entsprechendes gilt für das Anbringen des Haubenteils.

In einer weiteren bevorzugten Ausgestaltung sind die Luftanschlüsse auf einer Mantelfläche des einen Haubenteils insbesondere in eine radiale Richtung weisend angeordnet. Auf diese Weise ist auch die Montage und/oder Demontage des Haubenteils mit den Luftanschlüssen besonders vereinfacht, insbesondere im Gegensatz zu einer Ausführung mit auf einer Oberseite des Haubenteils angeordneten Luftanschlüssen. Die Luftanschlüsse weisen dann jeweils zur Seite des Gerätes weg, sodass bei nicht-angeschlossenen Rohren ein Abheben des Haubenteils nach oben möglich ist.

In einer weiteren bevorzugten Ausgestaltung sind die Luftanschlüsse in einer Umlaufrichtung um die Gerätehaube in einem Winkel von etwa, vorzugsweise genau 90° angeordnet, wodurch sich eine besonders hohe Flexibilität beim Anschluss von Rohren ergibt.

In einer weiteren bevorzugten Ausgestaltung ist an einem, vorzugsweise jeweils an beiden Luftanschlüssen ein abgewinkelter Anschlussstutzen, insbesondere Adapterstück angeschlossen, der bzw. das vorzugsweise einem Winkel von entweder 45° oder 90° folgt. Diese Ausgestaltung ermöglicht auf vorteilhafte Weise eine Anpassung der Luftanschlüsse an jegliche lokalen Gegebenheiten. Dazu wird ein jeweiliger Luftanschluss mit einem jeweiligen Adapterstück versehen, sodass der Luftanschluss nun in eine andere Richtung weist. Dadurch ist insbesondere eine Vielzahl an Konfigurationen insbesondere bei der Ausrichtung der Luftanschlüsse zueinander möglich. Beispielsweise ist es möglich, beide Luftanschlüsse mittels 90°-winkliger Adapterstücke jeweils entweder nach oben oder nach unten, d.h. insbesondere in axialer Richtung der Gerätehaube, zu führen. Mittels 45°-winkliger Adapterstücke ist es insbesondere möglich, die Winkelstellung der Luftanschlüsse anzupassen und beispielsweise in einem Winkel von 90° angeordnete Luftanschlüsse entsprechend seitlich in die gleiche Richtung weisen zu lassen. Auch eine 180°-Ausrichtung ist möglich, bei welcher dann das Gerät insbesondere in ein gerade verlaufendes Rohr einbaubar ist. Durch entsprechende Wahl der Anschlussstutzen sind auch Kombinationen der beschriebenen Neuausrichtung der beiden Luftanschlüsse möglich.

In einer weiteren bevorzugten Ausgestaltung sind die Anschlussstutzen jeweils am Luftanschluss drehbar, wodurch sich auf vorteilhafte Weise eine erhöhte Flexibilität insbesondere bei der Montage ergibt.

In einer weiteren bevorzugten Ausgestaltung sind die Anschlussstutzen jeweils wahlweise nach oben, nach unten oder zur Seite hin orientiert. Insbesondere in Kombination mit der oben erwähnten Ausgestaltung mit in radialer Richtung weisenden Luftanschlüssen ist dann auf vorteilhafte Weise das Gerät auch in anderen Richtungen anschließbar. Auch bei einer beispielsweise aufgrund der Zugänglichkeit der Bedienelemente des Gerätes vorgegebenen Anordnung desselben in einem Raum ist das Gerät mittels der insbesondere frei orientierbaren Anschlussstutzen trotzdem anschließbar.

Nachfolgend werden Ausführungsbeispiele der Erfindung anhand einer Zeichnung näher erläutert. Darin zeigen jeweils schematisch:
- Fig. 1a und 1b: eine Wärmepumpe mit Gerätehaube nach dem Stand der Technik,
- Fig. 1c: die Wärmepumpe nach dem Stand der Technik ohne Gerätehaube,
- Fig. 2a und 2b: eine Wärmepumpe mit zweiteiliger Gerätehaube,
- Fig. 3a bis 3d: die Montage der zweiteiligen Gerätehaube mittels eines Verbindungselements,
- Fig. 4: die zweiteilige Gerätehaube in einer Draufsicht,
- Fig. 5a und 5b: das Verriegelungselement in offener bzw. geschlossener Stellung,
- Fig. 6: die zweiteilige Gerätehaube mit Luftanschlüssen in einer Draufsicht,
- Fig. 7a bis 7d: jeweils eine Konfiguration der Gerätehaube mit 90°-winkligen Anschlussstutzen, und
- Fig. 8a bis 8d: jeweils eine Konfiguration der Gerätehaube mit 45°-winkligen Anschlussstutzen.

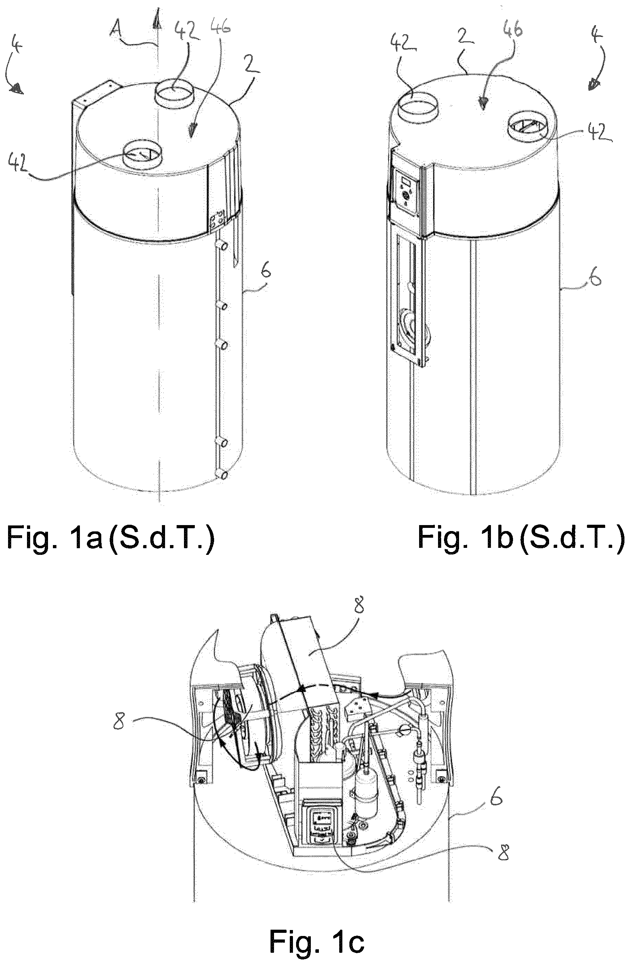

Die Fig. 1a und 1b zeigen jeweils in einer Schrägansicht ein Gerät 4, hier eine Wärmepumpe, gemäß dem Stand der Technik. Das Gerät 4 umfasst einen Grundkörper 6 mit darin angeordnetem, hier nicht näher gezeigten Wassertank oder auch Brauchwasserspeicher und eine auf dem Grundkörper 6 angeordnete Gerätehaube 2. Diese weist auf deren Oberseite 46 zwei Luftanschlüsse 42 auf. Das Gerät 4 im Gesamten und die Gerätehaube 2 im Einzelnen sind jeweils zylinderförmig ausgeführt und erstrecken sich in einer axialen Richtung A. Unter der Gerätehaube 2 sind diverse hier nicht näher sichtbare Komponenten 8 des Gerätes 4 angeordnet und werden von der Gerätehaube 2 verdeckt. Zum Freilegen der Komponenten 8 müssen zunächst Schrauben gelöst werden und anschließend die Gerätehaube 2 wie in Fig. 1b dargestellt in axialer Richtung A abgehoben werden. Dies ist besonders bei an den Luftanschlüssen 42 angebrachten Rohren schwierig.

In Fig. 1c ist das Gerät 4 mit entfernter Gerätehaube 2 gezeigt, sodass die darunterliegenden Komponenten 8 zugänglich sind, hier ein Lüfter oder Ventilator und ein Verdampfer.

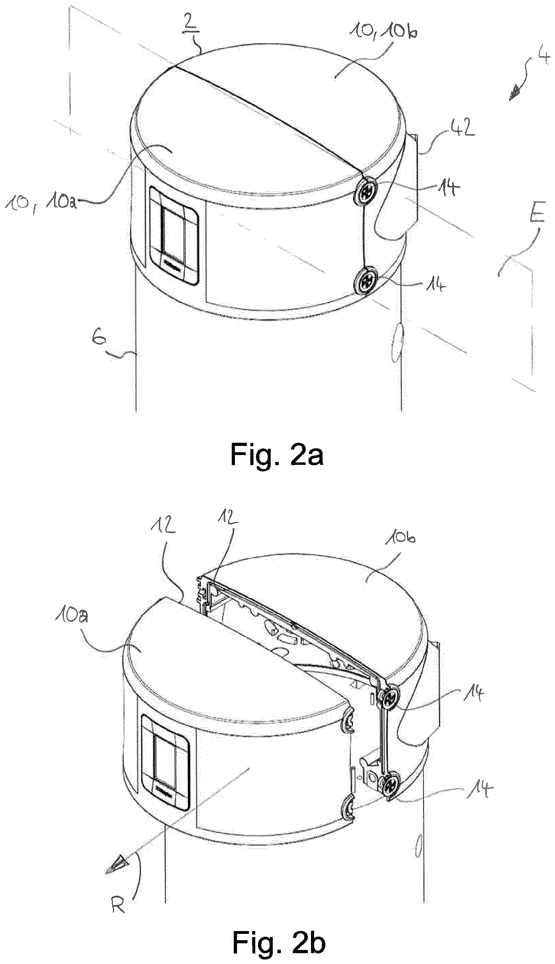

In den Fig. 2a und 2b ist eine erfindungsgemäße Gerätehaube 2 jeweils in einer Schrägansicht dargestellt. Die Gerätehaube 2 ist hier zweiteilig ausgeführt, mit zwei Haubenteilen 10, 10a, 10b, nämlich einem ersten und einem zweiten Haubenteil 10a, 10b, welcher hier halbzylinderförmig ausgebildet sind. Die beiden Haubenteile 10a, 10b sind in einer Verbindungsrichtung senkrecht zur axialen Richtung A, d.h. in einer radialen Richtung R des Gerätes 4 auseinanderziehbar, wie in Fig. 2b dargestellt ist. Fig. 2a zeigt dabei die Haubenteile 10a, 10b in montiertem und aneinandergesetztem Zustand.

Die Haubenteile 10a, 10b sind an Trennkanten 12 aneinander angesetzt. Die Trennkanten 12 sind hier jeweils etwa U-förmig ausgebildet und liegen in montiertem Zustand in einer Trennebene E aneinander an. Zur zusätzlichen Fixierung der Haubenteile 10a, 10b aneinander ist eine Anzahl von Verriegelungselementen 14 im Bereich der Trennkanten 12 angeordnet. Diese Verriegelungselemente 14 sind insbesondere seitlich und jeweils zwischen den beiden Trennkanten 12 angeordnet.

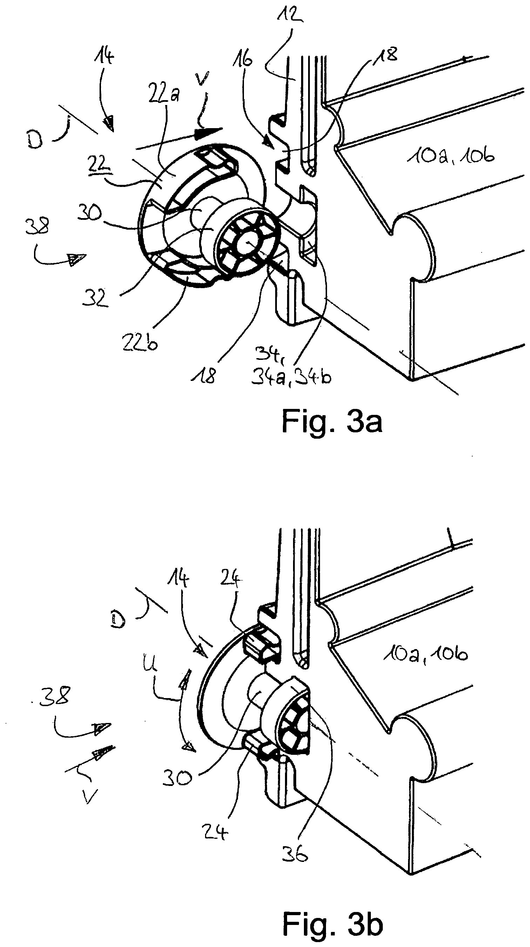

Die Montage und Wirkweise der Verriegelungselemente 14 ist in den Fig. 3a bis 3d, 4, 5a und 5d näher erläutert. So zeigt Fig. 3a zunächst, wie das Verriegelungselement 14 insbesondere in Verbindungsrichtung V in die Trennkante 12 des einen Haubenteils 10a, 10b eingesetzt wird. Deutlich erkennbar ist hierbei auch der Aufbau des Verriegelungselements 14 selbst. Dieses umfasst zunächst einen zentralen Zapfen 30, der sich in Richtung einer Drehachse D des Verriegelungselements 14 erstreckt. Endseitig ist am Zapfen 30 ein scheibenartiger Kopf angebracht, von dem aus sich ein Anlagesteg 22 in Richtung der Drehachse D und über etwa ein Drittel der Länge des Zapfens 30 erstreckt. Der Anlagesteg 22 ist C-förmig oder kreisbogenförmig ausgeführt und umfasst zwei durch eine Auslassung getrennte Teilstege 22a, 22b, die in Umlaufrichtung U um die Drehachse D herum verlaufen. Dabei umläuft der Anlagesteg 22 den Zapfen 30 um etwas mehr als zur Hälfte. Der Anlagesteg 22 bildet somit eine geschlossene Seite 38 des Verriegelungselements 14; in Fig. 3a ist die geschlossene Seite 38 entsprechend links angeordnet. Die dem Haubenteil 10a, 10b zugewandte rechte Seite ist dann eine offene Seite 36.

Die Teilstege 22a, 22b bilden endseitig des Anlagestegs 22 jeweils einen Führungsfortsatz 24 aus, welcher zum Einsetzen in das Haubenteil 10a, 10b derart orientiert ist, dass dieser zum Haubenteil 10a, 10b hin weist. Beim Einsetzen werden dann diese Führungsfortsätze 24 in Nutöffnungen 18 einer C-förmigen oder kreisbogenförmigen Nut 16 in der Trennkante 12 des Haubenteils 10a, 10b eingesteckt oder -geführt. Darauffolgend wird das Verriegelungselement 14 um 180° gedreht, d.h. es wird eine Halbdrehung ausgeführt, sodass wie in Fig. 3b gezeigt der Anlagesteg 22 im Wesentlichen in die Nut 16 eingefahren wird, d.h. insbesondere lediglich die Führungsfortsätze 24 über die Trennkante 12 hervorstehen; die offene Seite 36 zeigt nach vorn, in Fig. 3b also nach links. Diese Stellung des Verriegelungselements 14 wird auch als offene Stellung bezeichnet. In dieser Stellung ist das Verriegelungselement 14 zudem unverlierbar im Haubenteil 10a, 10b gehalten.

Am dem Kopf gegenüberliegenden Ende des Zapfens 30 ist eine zylinderförmige Anformung 32 als Haltekopf 32 angeordnet. In dem gezeigten Ausführungsbeispiel ist das Verriegelungselement 14 einstückig ausgeführt. Der Haltekopf 32 wird wie in Fig. 3a gezeigt eine Aufnahmekammer 34a, 34b in der Trennkante 12 des einen Haubenteils 10a, 10b eingesetzt und ist dort in Richtung der Drehachse D formschlüssig gehalten. Die beiden Aufnahmekammern 34a, 34b der beiden Haubenteile 10a, 10b bilden in zusammengesetztem Zustand eine gemeinsame Aufnahmekammer 34.

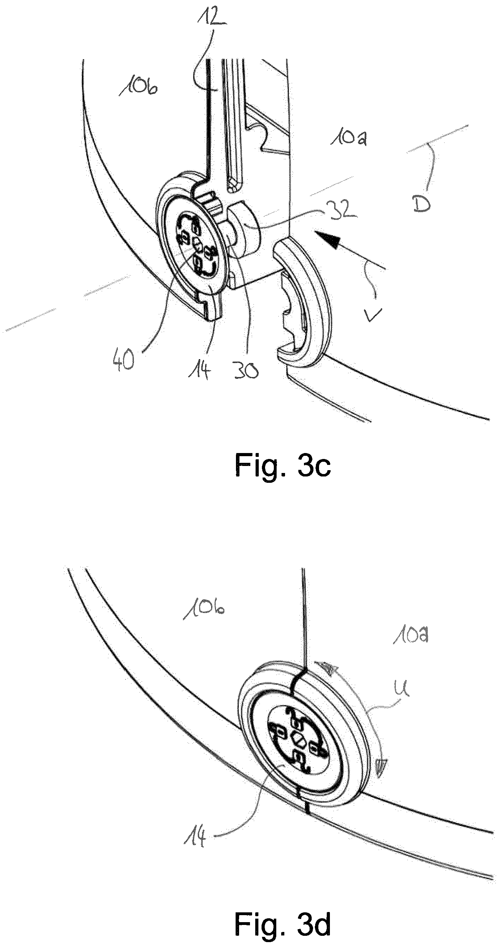

In Fig. 3c ist gezeigt, wie die beiden Haubenteile 10a, 10b in Verbindungsrichtung V aneinandergesetzt werden. Dabei weist auch das andere Haubenteil 10a, 10b eine C-förmige Nut 16 auf, in welche die Führungsfortsätze 24 beim Aneinandersetzen eingreifen. Fig. 3d zeigt schließlich die aneinandergesetzten und montierten Haubenteile 10a, 10b, wobei zur Fixierung der beiden Haubenteile 10a, 10b aneinander das Verriegelungselement 14 um 90°, d.h. mittels einer Vierteldrehung, in eine geschlossene Stellung überführt wurde. Die zwei Haubenteil 10a, 10b sind nun fest miteinander verbunden.

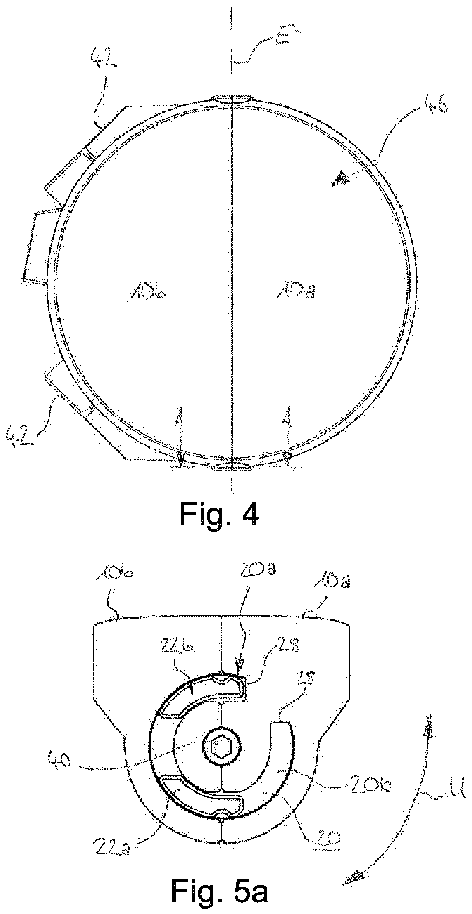

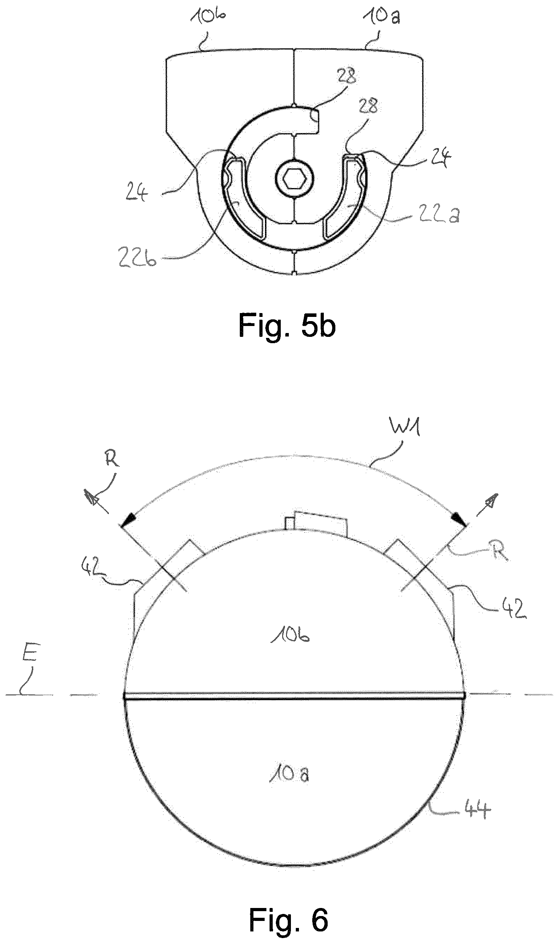

Fig. 4 zeigt die Gerätehaube 2 in einer Draufsicht, d.h. deren Oberseite 46. Die Fig. 5a und 5b zeigen die Gerätehaube 2 in einer Schnittansicht entlang der in Fig. 4 markierten Schnittebene A - A. Dabei zeigt Fig. 5a das Verriegelungselement 14 in der offenen Stellung, während Fig. 5b das Verriegelungselement 14 in geschlossener Stellung zeigt. Deutlich erkennbar ist hierbei zunächst die ringförmige Führungsnut 20, welche durch die beiden Nuten 16 gebildet ist und in welcher der Anlagesteg 22 geführt ist. Die Führungsnut 20 ist hier zudem durch einen massiven Abschnitt unterteilt, wodurch die Führungsnut 20 lediglich teilringförmig ausgebildet ist. Dadurch sind zwei Anschläge 28 für den Anlagesteg 22 ausgebildet, um insbesondere ein Überdrehen zu verhindern. Dadurch ist die Nut 16 im zweiten Haubenteil 10b in zwei Teilabschnitte 20a, 20b geteilt. In jeweils einer der beiden Stellungen offen und geschlossen liegt dann jeweils ein Führungsfortsatz 24 am entsprechenden Anschlag 28 an.

Das Gerät 4 umfasst zudem zwei Luftanschlüsse 42, die wie in der in Fig. 6 gezeigten Draufsicht der Gerätehaube 2 in einem Winkel W1 von 90° zueinander angeordnet sind. Dabei sind die Luftanschlüsse 42 auf einer Mantelfläche 44 der Gerätehaube 2 angeordnet und weisen in radialer Richtung R bezüglich des Gerätes 4.

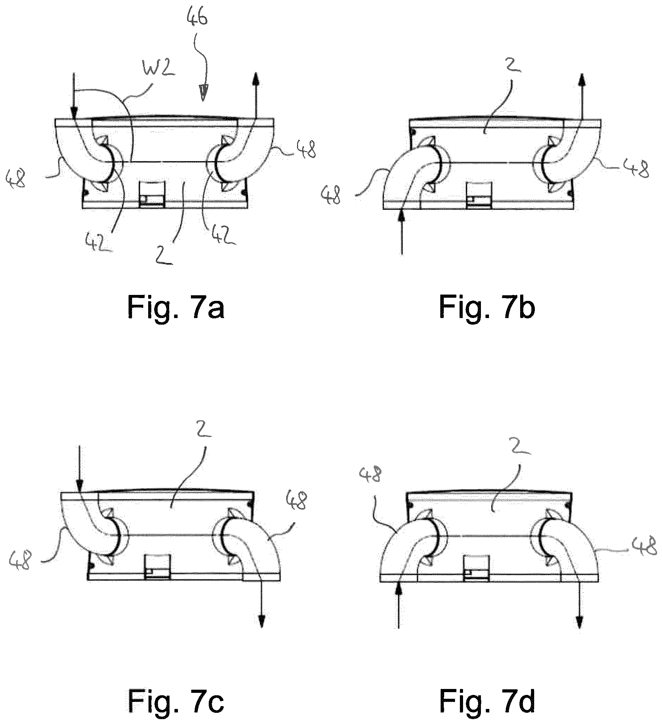

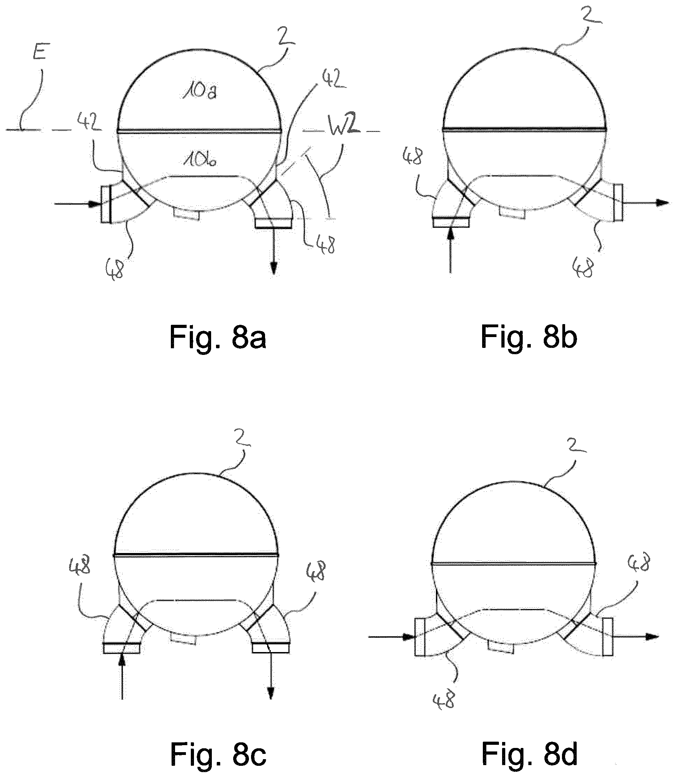

Um den Anschluss von Rohren an die Luftanschlüsse 42 besonders flexibel zu gestalten, sind Anschlussstutzen 48 oder Adapterstücke an den Luftanschlüssen 42 angebracht, wie in den Fig. 7a bis 7d und 8a bis 8d gezeigt ist. Die beiden Luftanschlüsse 42 sind hierbei an lediglich einem der beiden Haubenteile 10a, 10b ausgebildet, während das andere Haubenteil 10a, 10b frei von Luftanschlüssen 42 ist. Dabei ergeben sich diverse Kombinationsmöglichkeiten, zum Einstellen der Richtung, in welche ein jeweiliger Luftanschluss 42 weist. Die Anschlussstutzen 48 sind selbst jeweils winkelig mit einem Winkel W2 ausgebildet.

So sind in den Fig. 7a bis 7d 90°-winklige Anschlussstutzen 48 an die Luftanschlüsse 42 angeschlossen, sodass wahlweise ein Anschließen von oben oder von unten möglich ist. Dabei zeigen die Fig. 7a bis 7d die Gerätehaube 2 jeweils in einer Seitenansicht.

Die Fig. 8a bis d zeigen jeweils die Gerätehaube 2 in einer Draufsicht, mit 45°-winkligen Anschlussstutzen 48 an den Luftanschlüssen 42. Somit ist ein Anschließen von Rohren aus diversen seitlichen Richtungen möglich. Beispielsweise erfolgt in Fig. 8c ein Anschließen beider Luftanschlüsse 42 in rückwärtiger Richtung des Gerätes 4, in Fig. 8d dagegen beide Male von der Seite. Die Fig. 8a und b zeigen Kombinationen von seitlicher und rückwärtiger Ausrichtung der Luftanschlüsse 42.

**Bezugszeichenliste**

| | | | |
|---|---|---|---|
| 2 | Gerätehaube | 34a, 34b | Aufnahmekammer |
| 4 | Gerät, Wärmepumpe | 36 | offene Seite |
| 6 | Grundkörper | 38 | geschlossene Seite |
| 8 | Komponente | 40 | Werkzeugeingriff |
| 10 | Haubenteil | 42 | Luftanschluss |
| 10a | erstes Haubenteil | 44 | Mantelfläche |
| 10b | zweiten Haubenteil | 46 | Oberseite |
| 12 | Trennkante | | (der Gerätehaube) |
| 14 | Verriegelungselement | 48 | Anschlussstutzen, |
| 16 | Nut | | Adapterstück |
| 18 | Nutöffnung | | |
| 20 | Führungsnut | A | axiale Richtung |
| 20a, 20b | Teilabschnitt | D | Drehachse |
| 22 | Anlagesteg | E | Trennebene |
| 22a, 22b | Teilsteg | R | radiale Richtung |
| 24 | Führungsfortsatz | | (bzgl. der Gerätehaube) |
| 28 | Anschlag | U | Umlaufrichtung |
| 30 | Zapfen | V | Verbindungsrichtung |
| 32 | Anformung, Haltekopf | W1, W2 | Winkel |
| 34 | Aufnahme | | |

## Patentansprüche

1. Gerätehaube (2), insbesondere für eine Wärmepumpe (4), welche sich in einer axialen Richtung (A) erstreckt und ein erstes und ein zweites Haubenteil (10, 10a, 10b) aufweist, wobei die Haubenteile (10a, 10b) in montiertem Zustand an Trennkanten (12) aneinander anliegen und in einer Verbindungsrichtung (V) senkrecht zur axialen Richtung (A) auseinanderziehbar sind, wobei zur Fixierung der Haubenteile (10a, 10b) aneinander in montiertem Zustand eine lösbare Verriegelung mit zumindest einem drehbaren Verriegelungselement (14) angeordnet ist,
**dadurch gekennzeichnet,**
**dass** das Verriegelungselement (14) durch Drehung um eine Drehachse (D) zwischen einer offenen und einer geschlossenen Stellung reversibel überführbar ist und dass in der offenen Stellung die Haubenteile (10a, 10b) auseinanderziehbar sind, dass die Haubenteile (10a, 10b) jeweils eine Nut (16) aufweisen, die über die Trennkante (12) zugänglich ist, wobei die Nuten (16) eine gemeinsame Führungsnut (20) bilden, zur Führung des Verriegelungselements (14) beim Überführen zwischen dem offenen und dem geschlossenen Zustand, dass das Verriegelungselement (14) einen Anlagesteg (22) aufweist, der in der Führungsnut (20) geführt ist und um die Drehachse (D) herum verläuft und dass die Führungsnut (20) in einem der Haubenteile (10a, 10b) lediglich abschnittsweise ausgeführt ist und in zwei Teilabschnitte (20a, 20b) unterbrochen ist und zumindest einen Anschlag (28) für den Anlagesteg (22) ausbildet.

2. Gerätehaube (2) nach dem vorhergehenden Anspruch,
**dadurch gekennzeichnet,**
**dass** das Verriegelungselement (14) beim Auseinanderziehen unverlierbar an einem der Haubenteile (10a, 10b) gehalten ist und vorzugsweise, dass das Verriegelungselement (14) in eingesetztem Zustand in Richtung der Drehachse (D) formschlüssig gehaltert ist.

3. Gerätehaube (2) nach einem der vorhergehenden Ansprüche,
**dadurch gekennzeichnet,**
**dass** das Verriegelungselement (14) in montiertem Zustand der Haubenteile (10a, 10b) zwischen den Trennkanten (12) angeordnet, insbesondere von diesen umgriffen ist.

4. Gerätehaube (2) nach einem der vorhergehenden Ansprüche,
**dadurch gekennzeichnet,**
**dass** der Anlagesteg (22) in offener Stellung in die Nut (16) des einen Haubenteils (10a, 10b) eingefahren ist.

5. Gerätehaube (2) nach einem der vorhergehenden Ansprüche,
**dadurch gekennzeichnet,**
**dass** der Anlagesteg (22) zumindest einen Führungsfortsatz (24) ausbildet, der in offener Stellung in die Nut (16) des zweiten Haubenteils (10b) hineinragt.

6. Gerätehaube (2) nach einem der vorhergehenden Ansprüche ,
**dadurch gekennzeichnet,**
**dass** der Anlagesteg (22) beim Überführen von der offenen in die geschlossene Stellung teilweise von der Nut (16) des einen Haubenteils (10a, 10b) in die Nut (16) des anderen Haubenteils (10a, 10b) einfährt.

7. Gerätehaube (2) nach einem der vorhergehenden Ansprüche,
**dadurch gekennzeichnet,**
**dass** in geschlossener Stellung der Anlagesteg (22) zur Fixierung in beiden Haubenteilen (10a, 10b) eine Haltekontur hintergreift, welche durch die Führungsnut (20) ausgebildet ist.

8. Gerätehaube (2) nach einem der vorhergehenden Ansprüche ,
**dadurch gekennzeichnet,**
**dass** der Anlagesteg (22) gespalten ausgeführt ist, zur Ausbildung mehrerer, insbesondere zweier Teilstege (22a, 22b).

9. Gerätehaube (2) nach einem der vorhergehenden Ansprüche,
**dadurch gekennzeichnet,**
**dass** beide Haubenteile (10a, 10b) jeweils in der Trennkante (12) eine Aufnahmekammer (34,a 34b) aufweisen und die Aufnahmekammern (34a, 34b) in montiertem Zustand eine Aufnahme (34) bilden, in welcher das Verriegelungselement (14) formschlüssig gehalten ist und dadurch um die Drehachse (D) drehbar ist.

10. Gerätehaube (2) nach einem der vorhergehenden Ansprüche,
**dadurch gekennzeichnet,**
**dass** das Verriegelungselement (14) eine offene und eine geschlossene Seite (36, 38) aufweist und einen Anlagesteg (22), der lediglich auf der geschlossenen Seite (38) angeordnet ist, und
**dass** das Verriegelungselement (14) mit der offenen Seite (36) in die Trennkante (12) eines der Haubenteile (10a, 10b) einsetzbar ist.

11. Gerätehaube (2) nach einem der vorhergehenden Ansprüche,
**dadurch gekennzeichnet,**
**dass** eines der Haubenteile (10a, 10b) eine Anzahl von Luftanschlüssen (42) aufweist und das andere frei von Luftanschlüssen (42) ist.

12. Wärmepumpe (4), mit einem Grundkörper (6), der einen Wasserspeicher umfasst und auf dem eine Anzahl von Komponenten (8) angeordnet sind, wobei die Komponenten (8) von einer Gerätehaube (2) nach einem der vorhergehenden Ansprüche verdeckt sind.

## Claims

1. Device hood (2), in particular for a heat pump (4), which extends in an axial direction (A) and has a first and a second hood part (10, 10a, 10b), wherein, in an assembled state, the hood parts (10a, 10b) abut against one another at separating edges (12) and are able to be pulled apart in a direction of connection (V) perpendicular to the axial direction (A), wherein a releasable locking means having at least one rotatable locking element (14) is arranged for fixing the hood parts (10a, 10b) to one another in the assembled state,
**characterized**
**in that** the locking element (14) is able to be transferred in a reversible manner between an open and a closed position by rotation about an axis of rotation (D), and in that, in the open position, the hood parts (10a, 10b) are able to be pulled apart, in that the hood parts (10a, 10b) each have a groove (16) which is accessible via the separating edge (12), wherein the grooves (16) form a common guide groove (20) for guiding the locking element (14) during the transfer between the open and the closed state, in that the locking element (14) has an abutment web (22) which is guided in the guide groove (20) and which extends about the axis of rotation (D), and in that the guide groove (20) is formed only sectionally in one of the hood parts (10a, 10b) and is interrupted into two part-sections (20a, 20b) and forms at least one stop (28) for the abutment web (22) .

2. Device hood (2) according to the preceding claim,
**characterized**
**in that**, during the pulling-apart process, the locking element (14) is captively retained on one of the hood parts (10a, 10b), and preferably in that, in the inserted state, the locking element (14) is held in a form-fitting manner in the direction of the axis of rotation (D).

3. Device hood (2) according to either of the preceding claims,
**characterized**
**in that**, in the assembled state of the hood parts (10a, 10b), the locking element (14) is arranged between the separating edges (12), in particular is engaged around by said edges.

4. Device hood (2) according to one of the preceding claims,
**characterized**
**in that**, in the open position, the abutment web (22) has moved into the groove (16) of the one hood part (10a, 10b).

5. Device hood (2) according to one of the preceding claims,
**characterized**
**in that** the abutment web (22) forms at least one guide extension (24) which, in the open position, protrudes into the groove (16) of the second hood part (10b).

6. Device hood (2) according to one of the preceding claims,
**characterized**
**in that**, during the transfer from the open position into the closed position, the abutment web (22) moves in part from the groove (16) of the one hood part (10a, 10b) into the groove (16) of the other hood part (10a, 10b).

7. Device hood (2) according to one of the preceding claims,
**characterized**
**in that**, in the closed position, for the fixing in both hood parts (10a, 10b), the abutment web (22) engages behind a retaining contour which is formed by the guide groove (20).

8. Device hood (2) as claimed in one of the preceding claims,
**characterized**
**in that**, for forming multiple, in particular two, part-webs (22a, 22b), the abutment web (22) is of divided form.

9. Device hood (2) according to one of the preceding claims,
**characterized**
**in that** both hood parts (10a, 10b) have in each case a receiving chamber (34a, 34b) in the separating edge (12), and, in the assembled state, the receiving chambers (34a, 34b) form a receptacle (34) in which the locking element (14) is held in a form-fitting manner and is thereby able to be rotated about the axis of rotation (D).

10. Device hood (2) according to one of the preceding claims,
**characterized**
**in that** the locking element (14) has an open and a closed side (36, 38) and an abutment web (22)which is arranged only on the closed side (38), and
**in that** the locking element (14) is, with the open side (36), able to be inserted into the separating edge (12) of one of the hood parts (10a, 10b).

11. Device hood (2) according to one of the preceding claims,
**characterized**
**in that** one of the hood parts (10a, 10b) has a number of air ports (42) and the other one is free of air ports (42).

12. Heat pump (4), having a main body (6) which comprises a water tank and on which a number of components (8) are arranged, wherein the components (8) are covered by a device hood (2) according to one of the preceding claims.

## Revendications

1. Capot d'appareil (2), en particulier pour une pompe à chaleur (4) qui s'étend dans une direction axiale (A) et qui présente une première et une deuxième partie de capot (10, 10a, 10b), les parties de capot (10a, 10b) s'appliquant l'une contre l'autre dans l'état monté au niveau de bords de séparation (12), et pouvant être écartées l'une de l'autre dans une direction de connexion (V) perpendiculairement à la direction axiale (A), un verrouillage desserrable avec au moins un élément de verrouillage rotatif (14) étant disposé dans l'état monté pour la fixation l'une à l'autre des parties de capot (10a, 10b),
**caractérisé en ce que**
l'élément de verrouillage (14) peut être transféré de manière réversible par rotation autour d'un axe de rotation (D) entre une position ouverte et une position fermée et **en ce que**, dans la position ouverte, les parties de capot (10a, 10b) peuvent être écartées l'une de l'autre, **en ce que** les parties de capot (10a, 10b) présentent chacune une rainure (16) qui est accessible par le biais du bord de séparation (12), les rainures (16) formant une rainure de guidage commune (20) pour guider l'élément de verrouillage (14) lors du transfert entre l'état ouvert et l'état fermé, **en ce que** l'élément de verrouillage (14) présente une nervure d'appui (22) qui est guidée dans la rainure de guidage (20) et qui s'étend autour de l'axe de rotation (D) et **en ce que** la rainure de guidage (20) est réalisée seulement en partie dans l'une des parties de capot (10a, 10b) et est interrompue dans deux portions partielles (20a, 20b) et constitue au moins une butée (28) pour la nervure d'appui (22).

2. Capot d'appareil (2) selon la revendication précédente,
**caractérisé en ce que**
l'élément de verrouillage (14), lors de l'écartement, est retenu de manière imperdable au niveau de l'une des parties de capot (10a, 10b) et de préférence **en ce que** l'élément de verrouillage (14) est retenu par engagement par correspondance de formes dans l'état inséré dans la direction de l'axe de rotation (D).

3. Capot d'appareil (2) selon l'une quelconque des revendications précédentes,
**caractérisé en ce que**
l'élément de verrouillage (14), dans l'état monté des parties de capot (10a, 10b), est disposé entre les bords de séparation (12), en particulier est saisi sur son pourtour par ceux-ci.

4. Capot d'appareil (2) selon l'une quelconque des revendications précédentes,
**caractérisé en ce que**
la nervure d'appui (22), dans la position ouverte, est introduite dans la rainure (16) de l'une des parties de capot (10a, 10b).

5. Capot d'appareil (2) selon l'une quelconque des revendications précédentes,
**caractérisé en ce que**
la nervure d'appui (22) constitue au moins une saillie de guidage (24) qui, dans la position ouverte, pénètre dans la rainure (16) de la deuxième partie de capot (10b).

6. Capot d'appareil (2) selon l'une quelconque des revendications précédentes,
**caractérisé en ce que**
la nervure d'appui (22), lors du transfert de la position ouverte dans la position fermée, entre en partie depuis la rainure (16) de l'une des parties de capot (10a, 10b) dans la rainure (16) de l'autre partie de capot (10a, 10b).

7. Capot d'appareil (2) selon l'une quelconque des revendications précédentes,
**caractérisé en ce que**
pour la fixation dans les deux parties de capot (10a, 10b), un contour de retenue vient en prise par l'arrière dans la position fermée de la nervure d'appui (22), lequel est réalisé par la rainure de guidage (20).

8. Capot d'appareil (2) selon l'une quelconque des revendications précédentes,
**caractérisé en ce que**
la nervure d'appui (22) est réalisée sous forme fendue, pour réaliser plusieurs, en particulier deux, nervures partielles (22a, 22b).

9. Capot d'appareil (2) selon l'une quelconque des revendications précédentes,
**caractérisé en ce que**
les deux parties de capot (10a, 10b) présentent à chaque fois une chambre de réception (34,a 34b) dans le bord de séparation (12) et les chambres de réception (34a, 34b) forment un logement (34) dans l'état monté, dans lequel est retenu par engagement par correspondance de formes l'élément de verrouillage (14) qui peut de ce fait tourner autour de l'axe de rotation (D).

10. Capot d'appareil (2) selon l'une quelconque des revendications précédentes,
**caractérisé en ce que**
l'élément de verrouillage (14) présente un côté ouvert et un côté fermé (36, 38), et une nervure d'appui (22) qui est disposée seulement sur le côté fermé (38), et
**en ce que** l'élément de verrouillage (14) peut être inséré avec le côté ouvert (36) dans le bord de séparation (12) de l'une des parties de capot (10a, 10b).

11. Capot d'appareil (2) selon l'une quelconque des revendications précédentes,
**caractérisé en ce que**
l'une des parties de capot (10a, 10b) présente une pluralité de raccords d'air (42) et l'autre est exempte de raccords d'air (42).

12. Pompe à chaleur (4) comprenant un corps de base (6) qui comprend un accumulateur d'eau et sur lequel sont disposés une pluralité de composants (8), les composants (8) étant recouverts par un capot d'appareil (2) selon l'une quelconque des revendications précédentes.
